# EUROPÄISCHE PATENTSCHRIFT

(11) **EP 1 500 915 B1**
(45) Veröffentlichungstag und Bekanntmachung des Hinweises auf die Patenterteilung: **13.12.2017**
(21) Anmeldenummer: 04011814.3
(22) Anmeldetag: 18.05.2004
(51) Int. Cl.: G01K 15/00, B61K 9/06

(54) **Verfahren zur Auswertung der Signale von Temperatursonden**
Method for evaluating the signals generated by temperature sensors
Procédé pour évaluer les signaux émis par des capteurs de température

(30) Priorität: 25.07.2003 DE 10334072
(43) Veröffentlichungstag der Anmeldung: 26.01.2005
(73) Patentinhaber: Siemens Aktiengesellschaft, 80333 München (DE)
(72) Erfinder: Burg, Wilhelm, 91334 Hemhofen (DE); Werkmeister, Norbert, 53947 Nettersheim (DE)

(56) Entgegenhaltungen:
- DE-A- 10 004 464
- FR-A- 2 334 827
- US-A- 4 316 175
- US-A- 5 663 899

## Beschreibung

Die Erfindung betrifft ein Verfahren zur Auswertung der Signale von Temperatursonden, die insbesondere zur Heißläufererkennung an Radsatzlagern eines Schienenfahrzeuges angeordnet sind.

Solche Verfahren sind beispielsweise aus der US 4316175 A und der DE 10004464 A1 bekannt.

Mit dem Begriff "Temperatursonde" ist auch ein Temperatursensor oder ein Temperaturmessaufnehmer im allgemeinen Sinn gemeint. Temperatursonden werden in vielen technischen Bereichen eingesetzt, da es häufig notwendig ist, eine erhöhte Temperatur rechtzeitig zu erkennen, um Schäden vorzubeugen. Insbesondere dienen Temperatursonden an Radsatzlagern eines Schienenfahrzeuges zum frühzeitigen Erkennen einer Überhitzung, vor allem aufgrund eines Lagerschadens. Auch eine nicht gelöste Bremse kann zu einer Überhitzung führen. Falls ein Rad durch eine solche Überhitzung sehr heiß wird, kann es zum Radsatzbruch und auch zu Bränden am Fahrzeug und in der Umgebung der Bahnstrecke kommen.

Falls jedoch bei jedem angezeigten erhöhten Temperaturwert sofort Gegenmaßnahmen eingeleitet werden, würde der Betrieb der technischen Anlage, insbesondere der Zugbetrieb, zu sehr gestört. Es kann nämlich aus verschiedenartigen Gründen zu Fehlmessungen kommen.

Es ist daher bereits vorgeschlagen worden, die Signale von Temperatursonden einem Auswerteverfahren zu unterziehen, um fehlerhafte Signale zu erkennen und um auszuschließen, dass fehlerhafte Signale z.B. zum Anhalten eines Zuges führen. Die bisher bekannten Auswertungen sahen vor, dass bei einem Fehlen des Signals oder bei einem sehr hohen Signal von einem Defekt in der Sensorik ausgegangen wurde. So kann ein fehlendes Signal auf eine Leitungsunterbrechung und ein sehr hohes Signal auf einen Kurzschluss zurückzuführen sein. Es ist auch schon vorgeschlagen worden, bei einem Temperatursensor alle Messwerte, die physikalisch unmöglich sind, nicht zu beachten. Beispielsweise werden bei der Erkennung von Heißläufern Temperaturen unter -40°C und über +250°C nicht weiter beachtet. Ebenso wurden bisher Temperaturwerte dann nicht beachtet, wenn gegenüber dem früheren Messwert eine ungewöhnlich große Temperaturänderung festgestellt wurde. Ein solcher, zur Nichtbeachtung des Messwertes führender Temperaturgradient ist beispielsweise 20K/sec.

Mit den geschilderten Maßnahmen können bereits einige Fehlmessungen unterdrückt werden. Es kommt jedoch immer noch zu Störungsmeldungen, die nicht auf gravierende Störungen zurückzuführen sind.

Der Erfindung liegt die Aufgabe zugrunde, ein Verfahren zur Auswertung der Signale von Temperatursonden anzugeben, das in noch weitgehenderem Maße als bisher Fehlalarme ausschließt.

Die Aufgabe wird gemäß der Erfindung dadurch gelöst, dass jeder gemessene Temperaturwert mit einem zuvor bestimmten Mittelwert verglichen wird und dass bei einer Abweichung des gemessenen Temperaturwertes vom Mittelwert um einen festgelegten Betrag der gemessene Temperaturwert nicht berücksichtigt wird, wobei im laufenden Betrieb und eine Zeitspanne in der Größenordnung von Stunden nach Beginn einer Betriebspause der festgelegte Betrag größer als sonst gewählt wird und während eines Ruhezustands, der eine Zeitspanne in der Größenordnung von Stunden nach Beginn einer Betriebspause beginnt, der festgelegte Betrag kleiner als sonst gewählt wird.

Dadurch, dass mit einem Mittelwert verglichen wird, erzielt man den Vorteil, dass Fehlmessungen der Temperatursonden, die nicht auf eine erhöhte Temperatur zurückzuführen sind, weniger häufig Maßnahmen auslösen, wie beispielsweise das Anhalten eines Zuges.

Im laufenden Betrieb und eine Zeitspanne in der Größenordnung von Stunden nach Beginn einer Betriebspause wird der festgelegte Betrag größer als sonst gewählt. Damit wird berücksichtigt, dass zum Beispiel ein Radsatzlager oder eine Bremse eines Zuges im Betriebszustand des Zuges und auch während einer anschließenden Zeitspanne normalerweise, also ohne Defekt, heißer ist als sonst. Durch den höheren festgelegten Betrag, um den ein gemessener Temperaturwert vom Mittelwert abweichen darf, wird gewährleistet, dass eine allein auf den Betriebszustand zurückzuführende Temperaturerhöhung nicht zu einer Fehlermeldung führt .

Während eines Ruhezustands, der eine Zeitspanne in der Größenordnung von Stunden nach Beginn einer Betriebspause beginnt, wird der festgelegte Betrag kleiner als sonst gewählt. Da sich die Temperaturen im Ruhezustand über die überwachten Bauteile angeglichen haben, reicht dann vorteilhaft eine geringere Abweichung vom Mittelwert aus, um schon auf eine Fehlmessung zu schließen.

Beispielsweise erfolgen die Mittelwertbildung und die Auswertung für die rechte und die linke Seite des Schienenfahrzeuges getrennt. Damit wird der Vorteil erzielt, dass Einflüsse auf die Temperatur, die auf der rechten Seite des Zuges anders als auf der linken Seite sind, nicht zu Fehlmeldungen führen können.

Beispielsweise erfolgen die Mittelwertbildung und die Auswertung für die Signale, die bei bestimmten Signalaufbereitungsbaugruppen eintreffen, getrennt. Häufig ist nämlich mehreren Temperatursensoren eine Signalaufbereitungsbaugruppe zugeordnet. Z.B. können zwei Signalaufbereitungsbaugruppen pro Eisenbahnwagen vorgesehen sein. Dadurch, dass Mittelwertbildung und Auswertung für jede Signalaufbereitungsbaugruppe getrennt erfolgt, wird der Vorteil erzielt, dass Auswirkungen, die im Aufbau der Signalaufbereitungsbaugruppe begründet sind, keinen Einfluss auf die Auswertung haben können.

Beispielsweise wird zur Überprüfung eines Mittelwertes dieser mit einem Mittelwert, der für eine andere Signalaufbereitungsbaugruppe bestimmt wurde, verglichen. Damit wird der Vorteil erzielt, dass bei einer starken Abweichung ein Fehler in der Funktionsweise der Signalaufbereitungsbaugruppen erkannt werden kann.

Beispielsweise werden Temperaturwerte, die vom vorher bestimmten Temperaturwert um mehr als einen vorgegebenen Betrag abweichen, für die Mittelwertbildung nicht berücksichtigt. Damit bleiben stark vom Normalen abweichende Messwerte unberücksichtigt. Das gilt dann auch für die Mittelwertbildung. Beispielsweise werden Temperaturwerte unter -40°C und über +250°C nicht berücksichtigt.

Zusätzlich oder auch alternativ werden solche Temperaturwerte nicht berücksichtigt, die bei einem Vergleich mit früheren Messwerten einen Temperaturgradienten von mehr als 20K/sec ergeben.

Nach einem weiteren Beispiel wird ein gemessener Temperaturwert, der nach anderen Kriterien unberücksichtigt bleiben müsste, doch berücksichtigt, wenn der gleiche Wert an gleicher Stelle bereits einmal gemessen worden war. Dass der gleiche Wert an gleicher Stelle zweimal gemessen wird, wird als Indiz dafür angesehen, dass es sich bei diesem Wert nicht um eine Fehlmessung handelt. Es wird also vorteilhaft die Genauigkeit der Messung weiter verbessert.

Mit dem Verfahren nach der Erfindung wird insbesondere der Vorteil erzielt, dass die Signale von Temperatursonden so ausgewertet werden, dass es möglichst keine Fehlmeldungen gibt und Maßnahmen, wie z.B. das Anhalten eines Zuges, weitgehend nur dann ergriffen werden, wenn zum Beispiel wirklich ein Radsatzlager oder eine Bremse heißgelaufen ist.

Gemäß einem Ausführungsbeispiel sind Temperatursonden den Drehgestellen eines Zuges zugeordnet. Mehrere Sensoren, die eine Gruppe bilden, z.B. die Sensoren, die sich an einer Seite des Zuges befinden, sind mit einer gemeinsamen Signalaufbereitungsbaugruppe verbunden. Diese Signalaufbereitungsbaugruppen stehen über ein Bussystem sowohl mit dem Zugsteuergerät als auch mit einem Bremssteuergerät und mit einer Anzeigeeinrichtung, die eine Sprachausgabe aufweisen kann, in Verbindung. Die Anzeigeeinrichtung befindet sich im Führerstand. In den Signalaufbereitungsbaugruppen werden die gemessenen Temperatursignale mit zuvor bestimmten Mittelwerten verglichen und bei einer Abweichung um einen zu hohen Betrag werden beispielsweise Zugsteuergerät, Bremssteuergerät und Anzeigeeinrichtung aktiviert.

## Patentansprüche

1. Verfahren zur Auswertung der Signale von Temperatursonden, die insbesondere zur Heißläufererkennung an Radsatzlagern eines Schienenfahrzeugs angeordnet sind, wobei jeder gemessene Temperaturwert mit einem zuvor bestimmten Mittelwert verglichen wird, **dadurch gekennzeichnet, dass** bei einer Abweichung des gemessenen Temperaturwertes vom Mittelwert um mehr als einen festgelegten Betrag der gemessene Temperaturwert nicht berücksichtigt wird, wobei im laufenden Betrieb und eine Zeitspanne in der Größenordnung von Stunden nach Beginn einer Betriebspause der festgelegte Betrag größer als sonst gewählt wird und
während eines Ruhezustands, der eine Zeitspanne in der Größenordnung von Stunden nach Beginn einer Betriebspause beginnt, der festgelegte Betrag kleiner als sonst gewählt wird.

2. Verfahren nach Anspruch 1,
**dadurch gekennzeichnet, dass** die Mittelwertbildung und die Auswertung für die rechte und die linke Seite des Schienenfahrzeugs getrennt erfolgen.

3. Verfahren nach einem der Ansprüche 1 oder 2,
**dadurch gekennzeichnet, dass** die Mittelwertbildung und die Auswertung für die Signale, die bei bestimmten Signalaufbereitungsbaugruppen eintreffen, getrennt erfolgen.

4. Verfahren nach einem der Ansprüche 1 bis 3, **dadurch gekennzeichnet, dass** zur Überprüfung eines Mittelwertes dieser mit einem Mittelwert, der für eine andere Signalaufbereitungsbaugruppe bestimmt wurde, verglichen wird.

5. Verfahren nach einem der Ansprüche 1 bis 4, **dadurch gekennzeichnet, dass** Temperaturwerte, die vom vorher bestimmten Temperaturwert um mehr als einen vorgegebenen Betrag abweichen, für die Mittelwertbildung nicht berücksichtigt werden.

6. Verfahren nach einem der Ansprüche 1 bis 5, **dadurch gekennzeichnet, dass** ein Temperaturwert, der sonst nicht berücksichtigt würde, doch berücksichtigt wird, wenn ein gleicher Temperaturwert an gleicher Stelle bereits gemessen wurde.

## Claims

1. Method for evaluating the signals from temperature probes which are arranged on wheelset bearings of a rail vehicle, in particular for hot box detection, each measured temperature value being compared with a predetermined average value, **characterized in that**
if the measured temperature value differs from the average value by more than a stipulated amount, the measured temperature value is not taken into account, the stipulated amount being selected to be greater than otherwise during ongoing operation and for a period of the order of magnitude of hours after the beginning of an operating pause, and
the stipulated amount being selected to be smaller than otherwise during an idle state which begins in a period of the order of magnitude of hours after the beginning of an operating pause.

2. Method according to Claim 1,
**characterized in that** the averaging and the evaluation are carried out separately for the right-hand side and the left-hand side of the rail vehicle.

3. Method according to either of Claims 1 and 2,
**characterized in that** the averaging and the evaluation are carried out separately for the signals which arrive at particular signal conditioning assemblies.

4. Method according to one of Claims 1 to 3, **characterized in that**, in order to check an average value, the latter is compared with an average value determined for another signal conditioning assembly.

5. Method according to one of Claims 1 to 4, **characterized in that** temperature values which differ from the predetermined temperature value by more than a predefined amount are not taken into account for the averaging.

6. Method according to one of Claims 1 to 5, **characterized in that** a temperature value which would otherwise not be taken into account is taken into account if an identical temperature value has already been measured at the same location.

## Revendications

1. Procédé d'exploitation des signaux de sondes de température, qui sont montées notamment pour la détection de boîtes chaudes sur des boîtes d'essieu d'un véhicule ferroviaire, dans lequel on compare chaque valeur de température mesurée à une moyenne déterminée auparavant,
**caractérisé en ce que**
s'il y a un écart de la valeur de la température mesurée à la moyenne de plus d'un montant fixé, on néglige la valeur de température mesurée, dans lequel en fonctionnement courant, et dans un laps de temps de l'ordre de grandeur de quelques heures après le début d'un arrêt de fonctionnement, on choisit le montant fixé plus grand que d'habitude et
pendant un état de repos, qui fait commencer un laps de temps de l'ordre de grandeur de quelques heures après le début d'un arrêt de fonctionnement, on choisit le montant fixé plus petit que d'habitude.

2. Procédé suivant la revendication 1,
**caractérisé en ce que**
l'on effectue séparément la formation de la moyenne et l'exploitation pour le côté droit et le côté gauche du véhicule ferroviaire.

3. Procédé suivant l'une des revendications 1 ou 2,
**caractérisé en ce que**
l'on effectue séparément la formation de la moyenne et l'exploitation des signaux, qui concernent des modules de traitement du signal déterminé.

4. Procédé suivant l'une des revendications 1 à 3,
**caractérisé en ce que**,
pour contrôler une moyenne, on la compare à une moyenne, qui a été déterminée pour un autre module de traitement des signaux.

5. Procédé suivant l'une des revendications 1 à 4,
**caractérisé en ce que**
l'on néglige, pour la formation de la moyenne, les valeurs de température, qui s'écartent de la valeur de température déterminée auparavant de plus d'un montant donné à l'avance.

6. Procédé suivant l'une des revendications 1 à 5,
**caractérisé en ce que** l'on prend pourtant en compte une valeur de température, qui aurait été négligée sinon, si on a déjà mesuré au même endroit, une même valeur de la température.
